# EUROPÄISCHE PATENTSCHRIFT

(11) **EP 3 831 354 B1**
(45) Veröffentlichungstag und Bekanntmachung des Hinweises auf die Patenterteilung: **24.07.2024**
(21) Anmeldenummer: 20207410.0
(22) Anmeldetag: 13.11.2020
(51) Int. Cl.: A61G 5/10, B60B 1/04

(54) **RADNABE FÜR ROLLSTÜHLE**
WHEEL HUB FOR WHEELCHAIRS
MOYEU DE ROUE POUR FAUTEUILS ROULANTS

(30) Priorität: 03.12.2019 DE 102019132777
(43) Veröffentlichungstag der Anmeldung: 09.06.2021
(73) Patentinhaber: Golz, Heinz Günter, 33397 Rietberg (DE)
(72) Erfinder: Golz, Heinz Günter, 33397 Rietberg (DE)
(74) Vertreter: Brandt, Detlef

(56) Entgegenhaltungen:
- CN-A- 105 326 613
- DE-A1- 2 522 436
- US-A1- 2001 013 721

## Beschreibung

### Technisches Umfeld

Die Erfindung betrifft eine Radnabe für Rollstühle mit einem Nabenkörper, welcher eine zentrische innere Durchgangsbohrung und an seiner äußerem zylindrischen Umfangsfläche mit zwei beabstandet zueinander angeordneten, über die Umfangsfläche nach außen vorstehenden, kreisförmigen Nabenscheiben versehen ist, die jeweils einem äußeren Lochkreis von Durchgangsbohrungen zum Einsetzen von Speichen versehen sind, aufweist, wobei die Nabenscheiben als separate Bauelemente an je einer radialen, nach außen von der äußeren Umfangsfläche des Nabenkörpers abstehend angeordneten Anschlagfläche je eines Ringkörpers lösbar verdrehfest in einer Zentrierbohrung auf einem Zentrierabsatz des Nabenkörpers festgelegt sind und die Anschlagflächen an den einander abgewandten Außenseiten der Ringkörper angeordnet sind

### Stand der Technik

Radnaben für Rollstühle mit den eingangs geschilderten Merkmalen sind hinlänglich bekannt..

So ist beispielsweise aus der US 2001/0013721 A1 ein Rad zu Benutzung unter anderen in Rollstühlen bekannt, welches mit den gattungsbildenden Merkmalen des Anspruches 1 ausgestattet ist.

Die Erfordernisse von Rollstuhlfahrern insbesondere bei der individuellen Ausgestaltung ihrer Rollstühle in ästhetischer Hinsicht haben konstruktiv dazu geführt, dass die Speichenanordnung und Speichengestaltung vielfältige Variationen angenommen hat. Dies betrifft die Speichenanzahl, sowie die ästhetische Gestaltung der Speichen sowie deren Befestigung am Nabenkörper.

Um derartig individuelle Erfordernisse konstruktiv zu erfüllen, sind im Stand der Technik unterschiedliche Nabenkörpergestaltungen mit jeweilig Nabenscheiben bekannt geworden, die Lochkreise unterschiedlicher Durchmesser sowie mit einem unterschiedlichen Anzahl von Durchgangsbohrungen aufweisen. Da die entsprechenden Nabenkörper entsprechend individuell hergestellt werden müssen, was üblicherweise mittels eines Drehvorgangs aus Vollmaterial erfolgt, ist die Herstellung derartig individualisierter Nabenkörper zum gegenwärtigen Zeitpunkt mit nicht unbeträchtlichen Kosten im Vergleich zu den sonstigen ggf. standardisierten Bauteilen von Rollstühlen verbunden.

### Aufgabenstellung

Ausgehend vom vorbeschriebenen Stand der Technik ist es Aufgabe der Erfindung, unter Vermeidung der vorgenannten Nachteile eine Radnabe für Rollstühle bereitzustellen, die die Herstellkosten der verwendeten Radnaben und deren Lagerhaltung für individuelle Rollstuhlvarianten signifikant herabsetzt und die Einsatzzwecke derartige Rollstühle insbesondere in medizinischer Hinsicht erweitert.

### Lösung der Aufgabe

Die gestellte Aufgabenstellung wird für eine Radnabe für Rollstühle der eingangs geschilderten Art durch die im Anspruch 1 beschriebene technische Lehre gelöst.

Erfindungswesentlich dabei ist es, dass der Mittelpunkt (18) des äußeren Lochkreises jeder Nabenscheibe (4, 5) und der Mittelpunkt (17) der Zentrierbohrung (12) der jeweiligen Nabenscheibe (4, 5) um ein Maß U zueinander versetzt sind.

Es hat sich aufgrund der Weiterentwicklung der Medizintechnik ergeben, dass zur Rehabilitation bei Störungen der vestibulären Sinneswahrnehmung (Gleichgewichtssinn), die bei Ceribraler Parese (CP), Multipler Sklerose (MS), Hemiparese oder Schädelhirntraumas und Paraplegie auftreten können, spezielle Therapierollstühle erforderlich sind.

Der Gleichgewichtssinn befähigt einen gesunden Menschen üblicherweise dazu, den Körperschwerpunkt über den Körperstützpunkt aufrecht zu erhalten. Es hilft dabei die Orientierung bzgl. der Schwerkraft zu ermitteln, bei schnellen Bewegungen klar zu sehen, die Geschwindigkeit und Richtung der Bewegung zu bestimmen und durch automatische postulare Anpassung die Haltung und Stabilität unter verschiedenen Bedingungen und bei verschiedenen Aktivitäten zu erhalten. Das Gleichgewicht wird durch sensormotorische Kontrollsysteme erlangt und erhalten. Diese beinhalten den sensorischen Input der Augen (Seesinn), der Propriozeption (Tastsinn) und des vestibulären Systems (Bewegung, räumliche Orientierung).

Innerhalb der vestibulären Rehabilitationstherapie hat es sich nach neuartigen Untersuchungen als hilfreich und vorteilhaft erwiesen, bei im Rollstuhl sitzenden Personen die Genesung durch eine regelmäßige Auf- und Abbewegung des Rollstuhls mit den vom Körper notwendigen Reaktionen zu unterstützen. Um auf einfache Art und Weise dieses Ziel einer medizinischen Unterstützung erzielen zu können, hat es sich als vorteilhaft erwiesen, wenn der Mittelpunkt des äußeren Lochkreises jeder Nabenscheibe und der Mittelpunkt der Zentrierbohrung der jeweiligen Nabenscheibe, mit der sie auf dem Nabenkörper positioniert ist, um ein Maß U zueinander versetzt sind.

Das Maß U erzeugt bei einer Drehbewegung des Rollstuhlrades eine alternierende Bewegung des Rollstuhles durch einen unregelmäßigen exzentrischen Lauf des Rades. Die Intensität des unrunden Laufes kann dabei individuell angepasst werden, indem die Nabenscheiben bezüglich des Maßes U zwischen dem Mittelpunkt des äußeren Lochkreises jeder Nabenscheibe und dem Mittelpunkt der Zentrierbohrung variiert werden können.

Es lassen sich in Zusammenschau mit der technischen Lehre des Anspruches 1 Nabenscheiben für unterschiedliche Therapiezwecke herstellen, die ggf. kurzfristig und ohne großen Montageaufwand an dem Nabenkörper des jeweiligen Rollstuhles ausgetauscht werden können. Es lassen sich somit Therapiefortschritte infolge der Nutzung des Rollstuhles mit der Möglichkeit der alternierenden Bewegung durch Austausch entsprechender Nabenscheiben realisieren. Das Maß U kann entsprechend der therapeutischen Wirkung und der entsprechenden wissenschaftlichen Untersuchungen im medizinischen Bereich im Bereich von 5 bis 50 Millimeter liegen.

Besondere Ausgestaltungen des Gegenstandes der Erfindung ergeben sich in Zusammenschau mit der technischen Lehre des Anspruches 1 zusätzlich aus den Merkmalen der auf dem Hauptanspruche bezogenen Unteransprüche.

Bei vielen Rollstühlen besteht das Erfordernis, dass zusätzlich zu den Möglichkeiten, Rollstühle per Hand mit Hilfe eines am Rad angeordneten Handringes zu bremsen, zusätzliche Bremseinrichtungen gewünscht sind.

Es hat sich daher als vorteilhaft erwiesen, wenn die erfindungsgemäße Radnabe an einem der freien Enden der zylindrischen Umfangsfläche der Radnabe ein Aufnahmebund für eine Bremseinrichtung aufweist. Dieser Aufnahmebund kann an den Radnaben im Vorgriff auf die Montage einer Bremseinrichtung zusätzlich angeordnet werden, ohne dass sich die Herstellkosten der Radnabe signifikant erhöhen.

Der Aufnahmebund kann dabei so gestaltet sein, dass die Bremseinrichtung als Außenbackenbremse ausgebildet sein kann.

Zu diesem Zweck kann die Bremseinrichtung, mit einer Ankerplatte und zwei an der Ankerplatte festgelegten Außenbackenbremselementen versehen sein. Die Außenbackenbremselemente sind an der Ankerplatte mittels zweier Achsen drehbar festgelegt.

Die Außenbackenbremselemente können entsprechend einer vorteilhaften Ausgestaltung jeweils eine halbringförmige Kontur aufweisen, wobei der sich ergebende zwischen den Außenbackenelementen liegende Innenraum den Aufnahmebund des Nabenkörpers aufnimmt, so dass die halbringförmige Innenkontur der Außenbackenelemente beim Bremsvorgang am Aufnahmebund zur Anlage kommt. Zur Erzielung einer wirksamen Reibflächenpaarung kann es zweckmäßig sein, den Aufnahmebund mit einer Reibbuchse zu umhüllen und an der Ringinnenkontur der Außenbackenbremselemente zum Material der Reibbuchse passende Reibbeläge aufzubringen.

Die beiden an der Ankerplatte drehbar festgelegten Außenbackenbremselemente werden entsprechend einer vorteilhaften Ausgestaltung über eine gemeinsame Betätigungsvorrichtung in Form eines Bowdenzuges angesteuert.

Die Ankerplatte kann als plattenförmiges Bauteil ausgestaltet sein und einen kreisförmigen Bereich, dessen Querschnitt im Wesentlichen mit der Außenkontur der an der Ankerplatte festgelegten Außenbackenbremselemente übereinstimmt, aufweisen. An der Oberseite der Ankerplatte, den Achsen gegenüberliegend, ist zweckmäßig die Ankerplatte mit einem über die Außenkontur vorstehenden Halteplattenelement versehen Das Halteplattenelement ist als Universalhalteelement ausgeführt und zu diesem Zweck mit zwei Bohrungen, einem mittig zwischen den Bohrungen angeordneten Langloch und zwei zur Oberseite des Halteplattenelementes geöffneten Einschnitten versehen. Die Anordnung der Bohrungen 33, des Langloches 34 und der Einschnitte 35 ist dabei so gewählt, dass an nahezu allen am Markt befindlichen Rollstuhlvarianten die entsprechende Ankerplatte mittels der in Rede stehenden Befestigungsdurchbrüche angebaut werden kann.

### Figurenbeschreibung

Nachfolgend wird ein Ausführungsbeispiel des Gegenstandes der Erfindung anhand der beigefügten Zeichnungen näher erläutert.

Es zeigt:
- Figur 1: die Seitenansicht einer erfindungsgemäßen Radnabe in einer ersten Ausgestaltungsform,
- Figur 2: die Seitenansicht einer alternativen Ausgestaltungsform der erfindungsgemäßen Radnabe,
- Figur 3: eine Seitenansicht der Radnabe aus Figur 2 entsprechend des Pfeils A aus Figur 2,
- Figur 4: eine Seitenansicht der in der Ausgestaltungsvariante der Figur 2 und 3 auf der Radnabe aufgesetzten Nabenscheiben und
- Figur 5: eine perspektivische Ansicht der an eine erfindungsgemäße Radnabe anbaubaren Bremsvorrichtung.

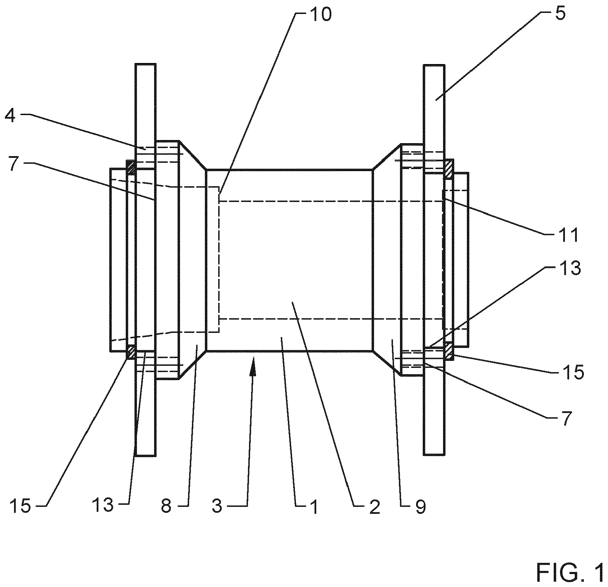

Die in Figur 1 in einer ersten Ausgestaltungsvariante dargestellte Radnabe für Rollstühle besteht prinzipiell aus einem zentralen Nabenkörper 1 sowie zwei auf den Nabenkörper 1 aufgeschobenen und mit diesem lösbar formschlüssig verbundenen Nabenscheiben 4 und 5. Mittig im Nabenkörper 1 befindet sich eine Durchgangsbohrung 2, die einen kleineren Durchmesser und zu den beiden Außenseiten des Nabenkörpers 1 hin jeweils einen Bund 10 und 11 aufweist, an dem sich ein größerer Durchmesserbereich anschließt.

In dem Bereich der größeren Durchmesser wird jeweils ein nicht näher dargestelltes Kugellager eingesetzt, welches zur Lagerung der Nabe auf einer ebenfalls nicht näher dargestellten Lagerwelle dient.

Außenseitig besitzt der Nabenkörper eine äußere Umfangsfläche 3, die zylindrisch ausgebildet ist. Diese befindet sich im Wesentlichen in der Mitte des Nabenkörpers 1. An den beiden seitlichen Enden der Umfangsfläche 3 schließt sich jeweils axial ein Ringkörper 8 und 9 an, der wiederum aus einem im Umfang ansteigenden schrägen Bereich besteht, an den sich ein Bereich mit zylindrischer Außenfläche anschließt.

Die jeweiligen zylindrischen Außenflächen der Ringkörper 8 und 9 besitzen jeweils an ihren voneinander abgewandten Außenseiten eine Anschlagfläche 6 und 7. Im zusammengebauten Zustand der Radnabe kommen die Nabenscheiben 4 und 5 an der jeweils korrespondierenden Anschlagfläche 6 und 7 zur Anlage. Mittels einer Zentrierbohrung 12 werden die Nabenscheiben 4 und 5 dabei auf einem jeweiligen Zentrierabsatz 13 des Nabenkörpers 1 mit entsprechender Passung zwischen Zentrierbohrung 12 und Zentrierabsatz 13 aufgesetzt, so dass die Mittelachsen der Zentrierbohrung 12 und des Nabenkörpers 1 miteinander fluchten.

Sowohl in den Ringkörpern 8 und 9 als auch in den Nabenscheiben 4 und 5 sind jeweils Bohrungen 14 zur formschlüssigen Verbindung von Nabenscheiben 4 und 5 mit dem Nabenkörper 1 mittels handelsüblichen Spannstifte vorgesehen.

Für eine axiale Fixierung der Nabenscheiben 4 und 5 auf den Zentrierabsätzen 13 befinden sich an der Außenseite der Nabenscheiben 4 und 5 jeweils Sprengringe 15.

Wie aus der Figur 1 ersichtlich ist, lässt sich durch die konstruktive Gestaltung der erfindungsgemäßen Radnabe der Nabenkörper 1 von den Nabenscheiben 4 und 5 trennen.

Auf dieser Weise ist es möglich, Radnaben mit einem Nabenkörper und unterschiedlichen Durchmessern von entsprechenden Lochkreisen zur Aufnahme von nicht näher dargestellten Speichen zu realisieren. Die konstruktive Gestaltung ermöglicht es somit für unterschiedliche Anwendung der Radnaben und verschiedene Gestaltung der Speichen jeweils Nabenscheiben 4 und 5 bereitzustellen, die sich ggf. sowohl im Lochkreisdurchmesser als auch in der Anzahl der in der jeweiligen Nabenscheibe 4, 5 angeordneten Löcher zur Aufnahme der Speichen unterscheiden.

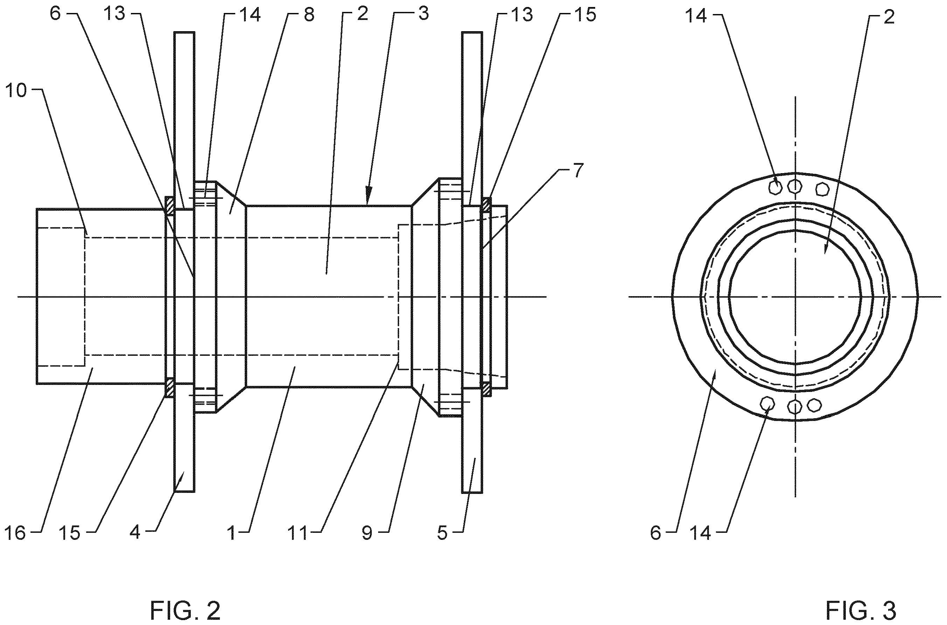

In der Figur 2 ist eine weitere Ausgestaltungsform der Radnabe gemäß der Erfindung dargestellt, die sich in zwei wesentlichen Punkten von der Darstellung der Ausführungsvariante in der Figur 1 unterscheidet.

Anzumerken ist hierbei, dass alle vergleichbaren Teile beider Ausführungsformen mit den gleichen Bezugsziffern gekennzeichnet sind.

Wesentlicher Unterschied zwischen den beiden Ausgestaltungsvarianten ist zu Einen die Tatsache, dass sich bei der Variante der Figur 2 an einer Seite des Nabenkörpers 1 ein Aufnahmebund 16 für eine Bremseinrichtung befindet. Aufgrund der hierdurch bedingten breiteren Gestaltung des Nabenkörpers 1 wandert auch der Bund 10, der den Übergang zwischen der inneren Durchgangsbohrung 2 und dem äußeren Durchmesser zur Aufnahme der Lager bildet, weiter nach außen, so dass er außerhalb des Bundes 8 des Nabenkörpers 1 liegt.

Einen weiteren wesentlichen Unterschied zwischen den beiden Ausgestaltungsvarianten bildet die Tatsache, dass die Nabenscheiben 4 und 5 der Figur 2 einen anderen Aufbau aufweisen als diejenigen der Figur 1.

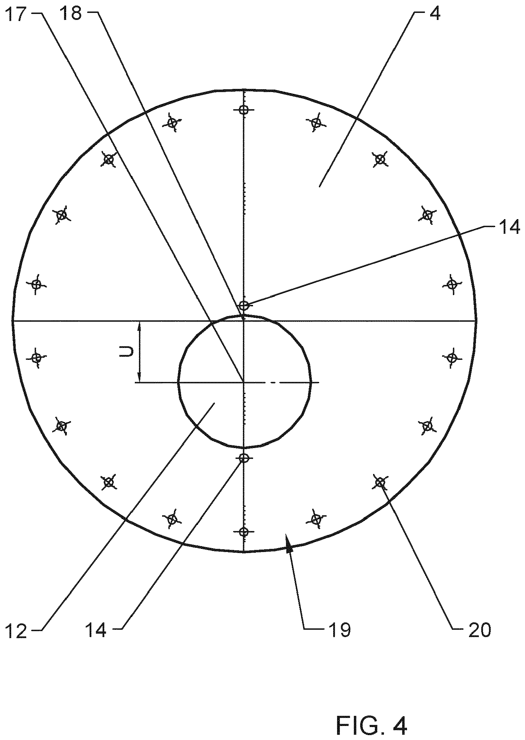

Zur Verdeutlichung ist eine Seitenansicht der Nabenscheibe 4, wie sie in der Ausgestaltungsvariante der Figur 2 verwendet wird, in der Figur 4 dargestellt. Aus dieser Figur ist ersichtlich, dass die Zentrierbohrung 12 zur Festlegung des Nabenscheiben 4 und 5 auf dem Nabenkörper 1 mit ihrem Mittelpunkt 17 der Zentrierbohrung 12 zum Mittelpunkt 18 des Nabenkörpers 4 beziehungsweise des Lochkreises 19 mit seinen Durchgangsbohrungen 20 ein Abstand U aufweist.

Auf dieser Weise entsteht eine Exzentrizität, die dazu führt, dass Bewegungen des Rollstuhls erzeugt werden, die medizinische Therapien für bestimmte in der Einleitung aufgeführte Krankheiten unterstützen.

In der Figur 4 ist auch ersichtlich, dass die Nabenscheiben 4 und 5 jeweils zwei Bohrungen 14 aufweisen, die der Befestigung der Nabenscheiben an der jeweiligen Anschlagfläche eines Ringkörpers dienen. In die Bohrungen 14 werden so genannte Spannösen eingeschlagen, die eine formschlüssige Verbindung zwischen Nabenscheibe 4 und Nabenkörper 1 herstellen.

Wie bereits oben geschildert, ist die in der Figur 2 dargestellte erfindungsgemäße Radnabe einseitig mit einem Aufnahmebund 16 versehen. Der Aufnahmebund 16 ist dafür vorgesehen, im Falle des Anbaus einer Bremseinrichtung an den mit einer erfindungsgemäßen Radnabe versehenen Rollstuhl als Anlage- und Bremsfläche für eine Außenbackenbremse zu dienen.

Die Außenbackenbremse stellt eine besonders einfache und platzsparende Variante einer Bremsvorrichtung dar und eröffnet im Hinblick auf ihre Gestaltung erfindungsgemäß eine Möglichkeit des Anbaus an unterschiedliche Rollstuhlvarianten.

Zu diesem Zweck ist die Bremseinrichtung, die in ihrer Gesamtheit mit 21 gekennzeichnet ist, mit einer Ankerplatte 22 und zwei an der Ankerplatte 22 festgelegten Außenbackenbremselementen 23 und 24 versehen. Die Außenbackenbremselemente 23 und 24 sind an der Ankerplatte 22 mittels zweier Achsen 25 und 26 drehbar festgelegt.

Die Außenbackenbremselemente 23 und 24 weisen jeweils eine halbringförmige Kontur auf, wobei der sich ergebende zwischen den Außenbackenelementen liegende Innenraum den Aufnahmebund 16 des Nabenkörpers 1 aufnimmt, so dass die halbringförmige Innenkontur der Außenbackenelemente 23 und 24 beim Bremsvorgang am Aufnahmebund 16 zur Anlage kommt. Zur Erzielung einer wirksamen Reibflächenpaarung kann es zweckmäßig sein, den Aufnahmebund 16 mit einer Reibbuchse zu umhüllen und an der Ringinnenkontur der Außenbackenbremselemente 23 und 24 zum Material der Reibbuchse passende Reibbeläge aufzubringen.

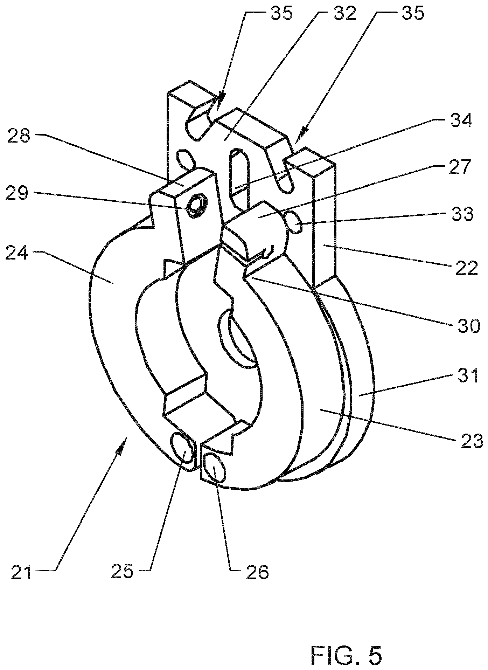

Die beiden an der Ankerplatte 22 drehbar festgelegten Außenbackenbremselemente 23 und 24 werden entsprechend einer vorteilhaften Ausgestaltung über eine gemeinsame Betätigungsvorrichtung in Form eines Bowdenzuges angesteuert, der in der Figur 5 aufgrund der Tatsache, dass er herkömmlichem Stand der Technik entspricht, nicht näher dargestellt ist.

Die Außenbackenbremselemente 23 und 24 besitzen zum Zwecke der Befestigung des in Rede stehenden Bowdenzuges an der den Achsen 25 und 26 gegenüberliegenden freien Enden jeweils einen Ansatz 27 und 28. Im Ansatz 28 ist eine Bohrung 29 eingebracht, durch die der Bowdenzug hindurchgeführt wird. Die Bohrung 29 ist so bemessen, dass der am freien Ende des Bowdenzuges üblicherweise angeordnete Bremsnippel in einer Verbreiterung der Bohrung 29 zur Anlage kommt, so dass ein weiteres Durchziehen des Bowdenzuges durch die Bohrung 29 blockiert ist. Im Ansatz 27 ist ein Schlitz 30 eingearbeitet, durch den der Bowdenzug hindurchgeführt wird.

Die Ankerplatte 22 ist als plattenförmiges Bauteil ausgestaltet und besitzt einen kreisförmigen Bereich 31, dessen Querschnitt im Wesentlichen mit der Außenkontur der an der Ankerplatte 22 festgelegten Außenbackenbremselemente 23 und 24 übereinstimmt. An der Oberseite der Ankerplatte 22, den Achsen 25 und 26 gegenüberliegend, besitzt die Ankerplatte 22 ein über die Außenkontur des Bereiches 31 vorstehendes Halteplattenelement 32. Das Halteplattenelement 32 ist, wie dies aus der Figur 5 hervorgeht, als Universalhalteelement ausgeführt und zu diesem Zweck mit zwei Bohrungen 33, einem mittig zwischen den Bohrungen 33 angeordneten Langloch 34 und zwei zur Oberseite des Halteplattenelementes 32 geöffneten Einschnitten 35 versehen. Die Anordnung der Bohrungen 33, des Langloches 34 und der Einschnitte 35 ist so gewählt, dass an nahezu allen am Markt befindlichen Rollstuhlvarianten die entsprechende Ankerplatte 22 mittels der in Rede stehenden Befestigungsdurchbrüche angebaut werden kann.

### Bezugszeichenliste:

- 1: Nabenkörper
- 2: Durchgangsbohrung
- 3: (äußere) Umfangsfläche
- 4: Nabenscheibe
- 5: Nabenscheibe
- 6: Anschlagfläche
- 7: Anschlagfläche
- 8: Ringkörper
- 9: Ringkörper
- 10: Bund
- 11: Bund
- 12: Zentrierbohrung
- 13: Zentrierabsatz
- 14: Bohrung
- 15: Sprengring
- 16: Aufnahmebund
- 17: Mittelpunkt (Zentrierbohrung 12)
- 18: Mittelpunkt (Nabenkörper 4)
- 19: Lochkreis
- 20: Durchgangsbohrung
- 21: Bremseinrichtung
- 22: Ankerplatte
- 23: Außenbackenbremselement
- 24: Außenbackenbremselement
- 25: Achse
- 26: Achse
- 27: Ansatz
- 28: Ansatz
- 29: Bohrung
- 30: Schlitz
- 31: Bereich
- 32: Halteplattenelement
- 33: Bohrung
- 34: Langloch
- 35: Einschnitt

## Patentansprüche

1. Radnabe für Rollstühle mit einem Nabenkörper (1), welcher eine zentrische innere Durchgangsbohrung (2) aufweist und an seiner äußeren zylindrischen Umfangsfläche (3) mit zwei beabstandet zueinander angeordneten, über die Umfangsfläche (3) nach außen vorstehenden, kreisförmigen Nabenscheiben (4, 5) versehen ist, die jeweils einen äußeren Lochkreis (19) von Durchgangsbohrungen (20) zum Einsetzen von Speichen besitzen,
wobei die Nabenscheiben (4, 5) als separate Bauelemente an je einer radialen, nach außen von der äußeren Umfangsfläche (3) des Nabenkörpers (1) abstehend angeordneten Anschlagfläche (6, 7) je eines Ringkörpers (8, 9) lösbar verdrehfest in einer Zentrierbohrung (12) auf einem Zentrierabsatz (13) des Nabenkörpers (1) festgelegt sind und die Anschlagflächen (6, 7) an den einander abgewandten Außenseiten der Ringkörper (8, 9) angeordnet sind,
**dadurch gekennzeichnet, dass**
der Mittelpunkt (18) des äußeren Lochkreises jeder Nabenscheibe (4, 5) und der Mittelpunkt (17) der Zentrierbohrung (12) der jeweiligen Nabenscheibe (4, 5) um ein Maß U zueinander versetzt sind.

2. Radnabe nach Anspruch 1,
**dadurch gekennzeichnet, dass**
das Maß U im Bereich von 5 bis 50 mm liegt.

3. Radnabe nach einem der Ansprüche 1 oder 2,
**dadurch gekennzeichnet, dass**
mit dem Nabenkörper (1) Nabenscheiben (4, 5) mit unterschiedlicher Anzahl von Durchgangsbohrungen (20) verbindbar sind.

4. Radnabe nach einem oder mehreren der Ansprüche 1 bis 3,
**dadurch gekennzeichnet, dass**
an einem der freien Enden der zylindrischen Umfangsfläche (3) des Nabenkörpers (1) ein Aufnahmebund (16) für eine Bremseinrichtung angeordnet ist.

5. Radnabe nach Anspruch 4,
**dadurch gekennzeichnet, dass**
die Bremseinrichtung (21) als Außenbackenbremse ausgebildet ist

6. Radnabe nach Anspruch 5,
**dadurch gekennzeichnet, dass**
die Bremseinrichtung (21) eine am Rollstuhl mittels einer Universalhaltevorrichtung festgelegte Ankerplatte (22) aufweist, die mit mindestens einer Achse (25, 26) zur drehbaren Lagerung eines Außenbackenbremselementes (23, 24) versehen ist.

7. Radnabe nach Anspruch 6,
**dadurch gekennzeichnet, dass**
an der Ankerplatte (22) zwei Achsen (25, 26) zur drehbaren Lagerung jeweils eines Außenbackenbremselementes (23, 24) angeordnet sind.

8. Radnabe nach Anspruch 7,
**dadurch gekennzeichnet, dass**
die Außenbackenbremselemente (23, 24) jeweils halbringförmig ausgebildet sind und an ihrer Ringinnenkontur je eine Reibfläche aufweisen.

9. Radnabe nach einem der Ansprüche 7 oder 8,
**dadurch gekennzeichnet, dass**
die Außenbackenbremselemente (23, 24) über eine gemeinsame Betätigungsvorrichtung angesteuert werden.

## Claims

1. Wheel hub for wheelchairs, comprising a hub body (1) which has a central inner through-bore (2) and is provided on its outer cylindrical circumferential surface (3) with two circular hub disks (4, 5) which are arranged at a distance from one another, project outward over the circumferential surface (3) and each have an outer hole circle (19) of through-bores (20) for the insertion of spokes,
the hub disks (4, 5) being releasably non-rotatably fixed in a centering bore (12) on a centering shoulder (13) of the hub body (1) as separate components in each case on a radial stop surface (6, 7), which protrudes outward from the outer circumferential surface (3) of the hub body (1), of an annular body (8, 9), and the stop surfaces (6, 7) being arranged on the outer sides of the annular bodies (8, 9) facing away from one another, **characterized in that**
the center point (18) of the outer hole circle of each hub disk (4, 5) and the center point (17) of the centering bore (12) of the relevant hub disk (4, 5) are offset from one another by a dimension U.

2. Wheel hub according to claim 1,
**characterized in that**
the dimension U is in the range of from 5 to 50 mm.

3. Wheel hub according to either claim 1 or claim 2,
**characterized in that**
hub disks (4, 5) having different numbers of through-bores (20) can be connected to the hub body (1).

4. Wheel hub according to one or more of claims 1 to 3,
**characterized in that**
a receiving collar (16) for a braking device is arranged at one of the free ends of the cylindrical circumferential surface (3) of the hub body (1).

5. Wheel hub according to claim 4,
**characterized in that**
the braking device (21) is designed as an outer block brake.

6. Wheel hub according to claim 5,
**characterized in that**
the braking device (21) has an anchor plate (22) which is fixed to the wheelchair by means of a universal holding device and is provided with at least one shaft (25, 26) for rotatably mounting an outer block brake element (23, 24).

7. Wheel hub according to claim 6,
**characterized in that**
two shafts (25, 26) for rotatably mounting an outer block brake element (23, 24) in each case are arranged on the anchor plate (22).

8. Wheel hub according to claim 7,
**characterized in that**
the outer block brake elements (23, 24) are each semi-annular and each have a friction surface on the annular inner contour thereof.

9. Wheel hub according to either claim 7 or claim 8,
**characterized in that**
the outer block brake elements (23, 24) are controlled via a common actuating device.

## Revendications

1. Moyeu de roue pour fauteuils roulants comportant un corps de moyeu (1) qui présente un alésage traversant intérieur central (2) et est pourvu, sur sa surface périphérique (3) extérieure cylindrique, de deux disques de moyeu (4, 5) circulaires faisant saillie vers l'extérieur sur la surface périphérique (3) et disposés à distance l'un de l'autre, lesquels disques de moyeu possèdent respectivement un cercle de trous extérieur (19) d'alésages traversants (20) pour l'insertion de rayons,
dans lequel les disques de moyeu (4, 5) sont fixés, en tant que composants séparés, de manière amovible et fixe en rotation dans un alésage de centrage (12) sur un épaulement de centrage (13) du corps de moyeu (1), au niveau de respectivement une surface de butée radiale (6, 7) de respectivement un corps annulaire (8, 9), lesquelles sont disposées de manière à faire saillie vers l'extérieur depuis la surface circonférentielle (3) extérieure du corps de moyeu (1), et les surfaces de butée (6, 7) sont disposées sur les faces extérieures opposées l'une à l'autre des corps annulaires (8, 9),
**caractérisé en ce que**
le centre (18) du cercle de trous extérieur de chaque disque de moyeu (4, 5) et le centre (17) de l'alésage de centrage (12) du disque de moyeu (4, 5) respectif sont décalés l'un de l'autre d'une dimension U.

2. Moyeu de roue selon la revendication 1,
**caractérisé en ce que**
la dimension U est comprise dans la plage allant de 5 à 50 mm.

3. Moyeu de roue selon l'une des revendications 1 ou 2,
**caractérisé en ce que**
des disques de moyeu (4, 5) comportant différents nombres d'alésages traversants (20) peuvent être reliés au corps de moyeu (1).

4. Moyeu de roue selon une ou plusieurs des revendications 1 à 3,
**caractérisé en ce que**
une collerette de réception (16) pour un appareil de freinage est disposée au niveau de l'une des extrémités libres de la surface périphérique (3) cylindrique du corps de moyeu (1).

5. Moyeu de roue selon la revendication 4,
**caractérisé en ce que**
l'appareil de freinage (21) est conçu comme un frein à mâchoires externe.

6. Moyeu de roue selon la revendication 5,
**caractérisé en ce que**
l'appareil de freinage (21) présente une plaque d'ancrage (22) fixée au fauteuil roulant au moyen d'un dispositif de maintien universel, laquelle est pourvue d'au moins un axe (25, 26) pour le montage rotatif d'un élément de frein à mâchoires externe (23, 24).

7. Moyeu de roue selon la revendication 6,
**caractérisé en ce que**
deux axes (25, 26) sont disposés sur la plaque d'ancrage (22) pour le montage rotatif de respectivement un élément de frein à mâchoires externe (23, 24).

8. Moyeu de roue selon la revendication 7,
**caractérisé en ce que**
les éléments de frein à mâchoires externe (23, 24) sont respectivement conçus sous forme de demi-anneau et présentent respectivement une surface de friction sur leur contour interne annulaire.

9. Moyeu de roue selon l'une des revendications 7 ou 8,
**caractérisé en ce que**
les éléments de frein à mâchoires externe (23, 24) sont commandés par l'intermédiaire d'un dispositif d'actionnement commun.
